# EUROPEAN PATENT APPLICATION

(11) **EP 1 806 200 A1**
(43) Date of publication of application: **11.07.2007**
(21) Application number: 05805325.7
(22) Date of filing: 26.10.2005
(51) Int. Cl.: B23K 11/20, B23K 11/16, B23K 9/23, B23K 26/32, B23K 103/20

(54) **METHOD FOR BONDING IRON-BASED MEMBER WITH ALUMINUM-BASED MEMBER**

(30) Priority: 26.10.2004 JP 2004311188
(71) Applicant: HONDA MOTOR CO., Ltd., Tokyo 107-8556 (JP)
(72) Inventor: HAYASHI, Noboru, Wako-shi, Saitama 3510193 (JP); NIISATO, Fumiaki, Wako-shi, Saitama 3510193 (JP); DOIRA, Kazuyoshi, Wako-shi, Saitama 3510193 (JP)
(74) Representative: Herzog, Markus
(86) International application number: PCT/JP2005/019703
(87) International publication number: WO 2006/046608

(57) **Abstract**

There is provided a method for excellently joining an iron member and an aluminum member. A steel sheet (1) composed mainly of iron and an aluminum sheet (3) composed mainly of aluminum are joined, wherein the steel sheet (1) has a zinc-containing zinc plated layer (2) formed on a joining side, and the steel sheet (1) and the aluminum sheet (3) are partially stacked and spot-welded while the zinc plated layer (2) is sandwiched therebetween.

## Description

### Technical field

The present invention relates to a method for joining an iron member and an aluminum member.

### Background art

Conventionally, for a body of a vehicle, such as automobile, steel sheet or the like has been used. On the other hand, weight reduction of the vehicle body has been demanded from a viewpoint of reducing fuel consumption. Therefore, it has been demanded to develop a technique of joining dissimilar materials, such as a steel sheet or the like and a light aluminum alloy sheet or the like, which may be applicable as a part of the vehicle body.

For such a joining of a steel sheet and an aluminum alloy sheet, proposals have been made, such as "joined body of dissimilar materials and method for resistance spot welding" (see Japanese Unexamined Patent Publication Kokai No. 2003-145278, paragraphs 0015-0031 and FIG. 1), and "method for joining different materials such as aluminum material and steel material" (Japanese Unexamined Patent Publication Kokai No. H09-155561, paragraphs 0019-0030, FIG. 1).

### Disclosure of the invention

In addition to the techniques disclosed in the above-mentioned patent documents, a method for further excellently joining an iron member and an aluminum member has been demanded.

Therefore, an object of the present invention is to provide a method for excellently joining an iron member and an aluminum member.

As a means for solving the above-mentioned problems, one aspect of the present invention provides a method for joining an iron member composed mainly of iron and an aluminum member composed mainly of aluminum, including steps of: forming a zinc layer on a joining side of at least one of the iron member and the aluminum member, partially stacking the iron member and the aluminum member with the zinc layer being sandwiched therebetween, and welding them together.

According to this method for joining an iron member and an aluminum member, at least one of the iron member and the aluminum member has a zinc layer formed on a joining side and the iron member and the aluminum member are welded while the zinc layer is sandwiched therebetween. Upon the welding, a part of zinc having a lower melting point and a part of aluminum are easily molten by heat of welding, and a part of the molten zinc diffuses in the aluminum member. Then, the part of the molten zinc diffused in the aluminum member is hardened, and thus the iron member and the aluminum member are excellently welded.

In addition, in the method for joining an iron member and an aluminum member according to the present invention, the aluminum member may contain magnesium.

According to such a method for joining an iron member and an aluminum member, a joining strength between the iron member and the aluminum member is enhanced since the aluminum member contains magnesium.

In addition, in the method for joining an iron member and an aluminum member according to the present invention, the welding may be at least one of resistance welding, laser welding, electron beam welding and arc welding.

According to such a method for joining an iron member and an aluminum member, the iron member and the aluminum member are suitably welded by at least one of resistance welding, laser welding, electron beam welding and arc welding.

Examples of the resistance welding include spot welding, seam welding and projection welding.

As shown above, the present invention provides a method for joining an iron member and an aluminum member wherein the iron member and the aluminum member are excellently welded.

The various aspects, other advantages and further features of the present invention will become more apparent by describing in detail illustrative, non-limiting embodiments thereof with reference to the accompanying drawings.

### Brief Description of the drawings

FIG. 1 shows cross sectional views stepwise explaining a method for joining an iron member and an aluminum member according to one embodiment of the present invention: (a) shows a state before stacking a steel sheet and an aluminum sheet; (b) shows a state in which the steel sheet and the aluminum sheet are stacked and welded; and (c) shows a state after welding.
FIG. 2 is a diagrammatic sectional view showing a rupture state after performing a tensile test of an iron member-aluminum member joined body formed by joining an iron member and an aluminum member.
FIG. 3 is a graph showing relationships between magnesium content and joining strength of aluminum sheets in Examples 1 - 15.

### Description for reference characters

- 1: Steel sheet (iron member)
- 2: Zinc plated layer (zinc layer)
- 3: Aluminum sheet (aluminum member)
- 4: Electrode
- 5: Nugget
- 6: Steel sheet-aluminum sheet joined body

### Best mode for carrying out the invention

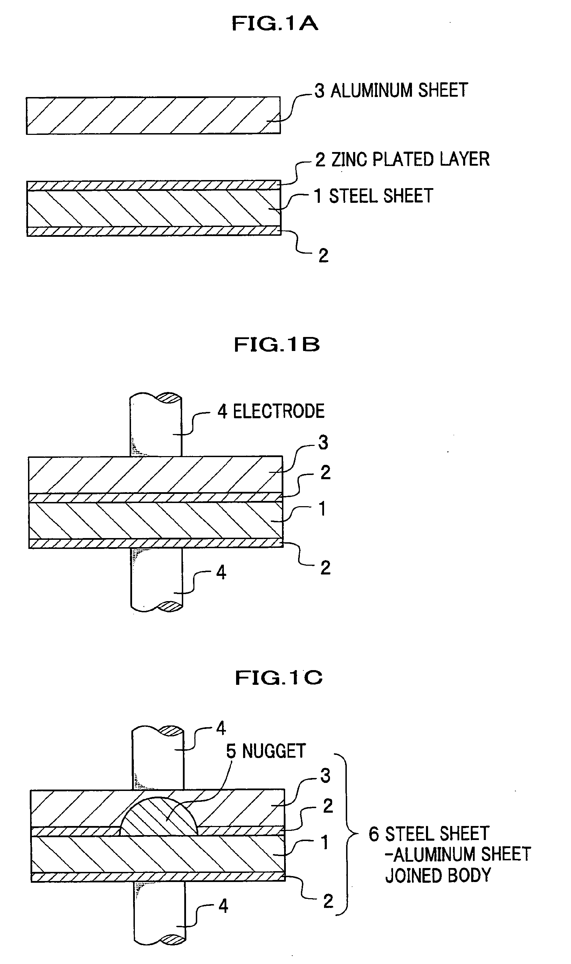

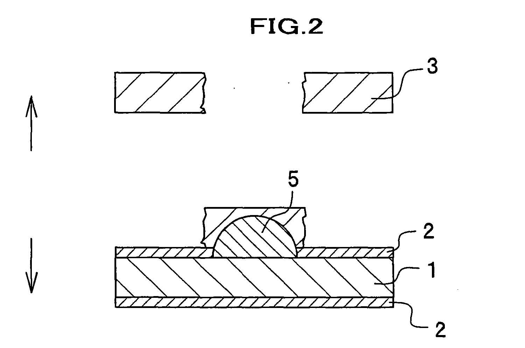

Next, an embodiment of the present invention will be descried with reference to FIGs. 1 and 2.

FIG. 1 shows cross sectional views stepwise explaining a method for joining an iron member and an aluminum member according to one embodiment of the present invention: (a) shows a state before stacking a steel sheet and an aluminum sheet; (b) shows a state in which the steel sheet and the aluminum sheet are stacked and welded; and (c) shows a state after welding. FIG. 2 is a diagrammatic sectional view showing a rupture state after performing a tensile test of an iron member-aluminum member joined body formed by joining an iron member and an aluminum member.

### «Method for joining iron member and aluminum member»

Referring to FIG. 1, the method for joining an iron member and an aluminum member according to the present embodiment includes: a first step in which zinc plated layers 2,2 (zinc layers) are formed on both sides (joining side and non-joining side) of a steel sheet 1 (iron member) ; and a second step in which the steel sheet 1 on which the zinc plated layer 2 is formed and an aluminum sheet 3 (aluminum member) are stacked, and resistance welding is performed.

### <1st step: formation of zinc plated layer>

As shown in FIG. 1(a), on both sides of the steel sheet 1 composed mainly of iron, the zinc plated layers 2,2 containing zinc are formed by, for example, hot dip galvanization. As the steel sheet 1, a mild steel sheet, a high-tensile strength steel sheet (e.g., a 590 MPa grade high-tensile strength steel sheet and a 780 MPa grade high-tensile strength steel sheet) and the like can be used.

As a method for forming the zinc plated layer 2 on the steel sheet 1, hot-dip plating, electroplating and the like can be used.

It is preferable that a zinc content of each zinc plated layer 2 be 45.0-100.0 % by mass. As long as the zinc content falls in this range, any element other than zinc (e.g., Al, Mg and Fe) may be contained in each zinc plated layer 2. In other words, the zinc plated layer 2 may have a high zinc content and be composed mainly of zinc, or have a low zinc content (though the zinc content should be 45 % by mass or more).

In the present invention, with respect to an amount of the zinc plated layer 2 formed on one side of the steel sheet 1, there is no specific limitation. However, the amount is preferably 5 - 250 g/m².

In addition, since the zinc plated layer 2 is formed not on the aluminum sheet 3 but only on the steel sheet 1, aluminum can be easily recycled.

With respect to the steel sheet 1 having the zinc plated layer 2 formed thereon, hereinafter, the steel sheet 1 having the zinc plated layer 2 formed thereon by hot-dip plating may be referred to as "hot dip galvanized steel sheet"; the steel sheet 1 having the zinc plated layer 2 formed thereon by hot-dip plating and alloyed by heat treatment may be referred to as "alloyed-galvanized steel sheet"; and the steel sheet 1 having the zinc plated layer 2 formed thereon by electroplating may be referred to as "electrogalvanized steel sheet".

Depending on the composition of the zinc plated layer 2, for example, the zinc plated layer 2 composed mainly of zinc and aluminum may be referred to as "Al-Zn plated steel sheet", and the zinc plated layer 2 composed mainly of zinc, aluminum and magnesium may be referred to as "Zn-Al-Mg plated steel sheet".

### <2nd step: stacking and resistance welding>

Next, as shown in FIG. 1(b), the steel sheet 1 having the zinc plated layer 2 formed on the joining side and the aluminum sheet 3 are stacked in such a manner that the zinc plated layer 2 is sandwiched therebetween, and resistance welding is performed on the stacked portion. Hereinbelow, description is made regarding a case where resistance welding of the stacked portion is performed by spot welding using a pair of electrodes 4,4.

### [Aluminum sheet]

The aluminum sheet 3 will be described below.

The aluminum sheet 3 is an aluminum alloy sheet composed mainly of aluminum. It is preferable that the aluminum sheet 3 contain magnesium. The reason is that resistance welding forms a nugget 5 (joined portion) in the aluminum sheet 3, including an intermetallic compound (Al-Zn-Mg) with magnesium and aluminum in the aluminum sheet 3 with zinc, which enhances a welding strength (joining strength) (see FIG. 1 (c)).

It is preferable that a magnesium content of the aluminum sheet 3 be 0.2 - 10.0 % by mass. When the magnesium content is less than 0.2 % by mass, an amount of magnesium that can form the above-mentioned intermetallic compound is too small, and a joining strength becomes low. On the other hand, when the magnesium content is above 10 % by mass, stress corrosion cracks and the like may occur on the aluminum sheet 3 (aluminum matrix), thus the aluminum sheet 3 becomes not suitable for structure member.

Subsequently, the steel sheet 1 having the zinc plated layers 2,2 formed thereon and the aluminum sheet 3 are stacked in such a manner that the zinc plated layer 2 on the joining side is sandwiched therebetween, and a stacked state is retained by, for example, jigs. Next, from both outer sides thereof, the stacked portion is pinched by the electrodes 4,4 with a specific pressure, and a cycle of a specific current application is repeated at a specific number.

With this current application, zinc having a lower melting point in the zinc plated layer 2 is preferentially molten, and the molten zinc diffuses in the aluminum sheet 3. The diffused zinc forms the nugget 5 (joining portion) including an intermetallic compound (Al-Zn-Mg) with aluminum and magnesium which are partially molten in the aluminum sheet 3.

In this current application, a melting point of zinc (approximately 420 °C) and a melting point of zinc-aluminum alloy (for example, 380 °C for Zn-Al alloy with a composition of Zn:Al = 89-97: 11-3) are low, and the steel sheet 1 and the aluminum sheet 3 can be excellently joined without applying a high current by a high voltage.

In other words, elution of the molten aluminum and the like to an electrode 4-side can be prevented since a high current is not applied and welding can be performed at a lower temperature. As a result, aluminum and electrode can be prevented from becoming alloy, which enhances durability of the electrode and continuous weldability.

After repeating a specific number of current application cycles, current application is terminated. Temperatures of the steel sheet 1 and the aluminum sheet 3 drop, which allows zinc diffused in the aluminum sheet 3 to be age-hardened. At the same time, temperature of the nugget 5 also drops due to termination of current application, and a strength of the nugget 5, i.e., welding strength (joining strength) between the steel sheet 1 and the aluminum sheet 3 can be enhanced.

As described above, a steel sheet-aluminum sheet joined body 6 (iron member-aluminum member joined body) can be obtained in which the steel sheet 1 (iron member) and the aluminum sheet 3 (aluminum member) are excellently welded (joined).

### <<Iron member-aluminum member joined body>>

Thus obtained steel sheet-aluminum sheet joined body 6 will be described below. The steel sheet-aluminum sheet joined body 6 is formed of the steel sheet 1 and the aluminum sheet 3 joined together. Therefore, for example, it is remarkably lighter than a joined body formed of steel sheets 1 joined together.

In addition, as described above, in the steel sheet-aluminum sheet joined body 6, the steel sheet 1 and the aluminum sheet 3 are strongly joined through the nugget 5 in a form of intermetallic compound Al-Zn-Mg. When a tensile test is performed on the steel sheet-aluminum sheet joined body 6 for measuring a joining strength, the steel sheet 1 is not simply detached from the aluminum sheet 3; instead, as shown in FIG. 2, the aluminum sheet 3 positioned outside the nugget 5 will be partially ruptured and the steel sheet-aluminum sheet joined body 6 (see FIG. 1) will be broken. This may be because joining of the nugget 5 and the steel sheet 1, as well as joining of the nugget 5 and the aluminum sheet 3, is extremely strong, and thus drawing the members away from each other will rupture the aluminum sheet 3 which has the lowest mechanical strength.

As described above, the iron member-aluminum member joined body, which is light and formed of the steel sheet 1 and the aluminum sheet 3 joined together with a high strength, is applicable to a variety of fields. For example, in a filed of automobile, the iron member-aluminum member joined body can be suitably used as a panel to be joined to a main frame of a vehicle body.

One embodiment of the present invention has been described above. However, the present invention should not be limited to the above embodiment, and it is a matter of course that the above embodiment may properly be modified without departing from the scope of the present invention.

For example, in the embodiment above, the steel sheet 1 and the aluminum sheet 3 are joined by one type of resistance welding, i.e., spot welding. However, seam welding or projection welding may be used as resistance welding.

Moreover, the welding is not limited to resistance welding, and other weldings, such as laser welding, electron beam welding and arc welding, may be used.

In the laser welding it is desirable that, at the stacked portion of the steel sheet 1 and the aluminum sheet 3, laser beam be irradiated on the steel sheet 1 (iron member) to directly heat the steel sheet 1, and the aluminum sheet 3 be partially molten by residual heat. This is because laser beam reflect diffusely and a large amount of energy will be lost, if laser beam is irradiated on the aluminum sheet 3.

In the above-mentioned embodiment, the zinc plated layer 2 (zinc layer) is formed by hot dip galvanization. However, a method for forming the zinc layer is not limited to this embodiment, and the zinc layer may be formed by electrical method (electrodeposition), coating, spraying and the like.

In the above-mentioned embodiment, the zinc plated layer 2 (zinc layer) is formed on both sides (joining side and non-joining side) of the steel sheet 1 (iron member). However, the zinc plated layer 2 may be formed on at least a joining side of one of the steel sheet 1 and the aluminum sheet 3 (aluminum member).

The present invention will be described in more detail with reference to Examples.

### (1) Examples 1 - 3

In each of Examples 1-3, a hot dip galvanized steel sheet having a zinc plated layer 2 with a thickness of 10.0 µm formed thereon and the aluminum sheet 3 with a different magnesium content were joined, and a joining strength was measured.

### (1-1) Example 1

### (1-1-1) Formation of zinc plated layer and welding

As a steel sheet 1, a mild steel sheet having a thickness of 1.0 mm was prepared, and on both sides (joining side and non-joining side) thereof, the zinc plated layers 2,2 each having a thickness of 10.0 µm were formed by hot dip galvanization, to thereby obtain a hot dip galvanized steel sheet. A composition of the zinc plated layer 2 was 99.5 % by mass of zinc and 0.5 % by mass of aluminum.

Then, the hot dip galvanized steel sheet and a 6,000 series aluminum sheet 3 having a thickness of 1.0 mm containing 0.5 % by mass of magnesium and 1.0 % by mass of silicon were partially stacked, and resistance welding was performed by spot welding.

For spot welding, a stacked portion of the steel sheet 1 and the aluminum sheet 3 was pinched by the electrodes 4 each having a diameter of a contact part of 6 mm, with 1.47 kN (150 kgf), and a cycle of applying a current of 14 kA was repeated for 18 times. (1-1-2) Measurement of joining strength

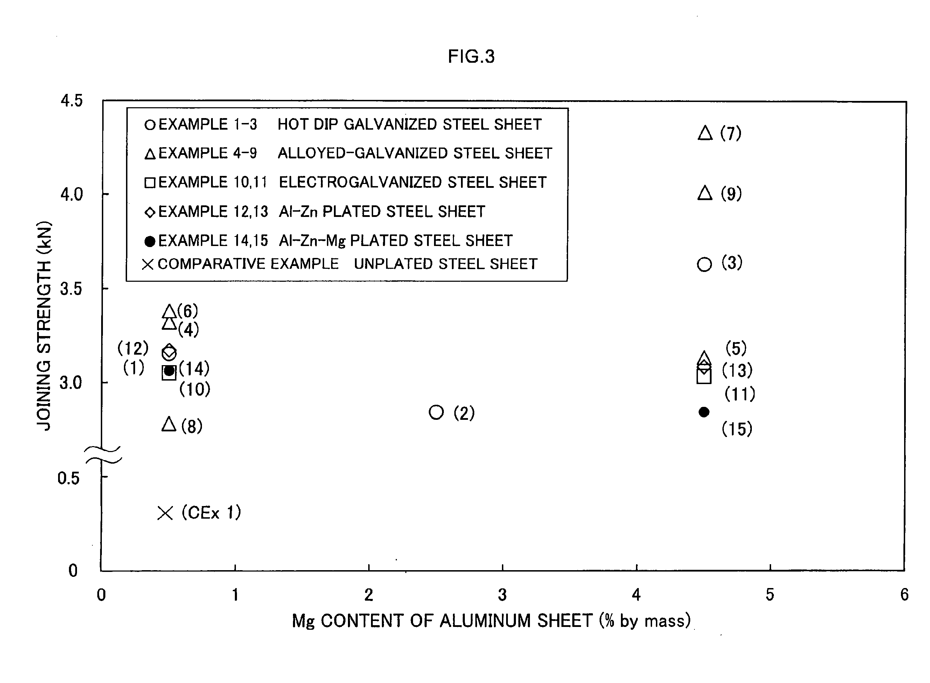

In conformity with JIS Z3136 "Specimen dimensions and procedure for shear testing resistance spot and embossed projection welded joints", a tensile test was performed on the steel sheet-aluminum sheet joined body 6 of Example 1, and a joining strength (rupture strength) was measured. A result of measurement is shown in Table 1 and FIG. 3, together with various properties and welding conditions of the hot dip galvanized steel sheet and the aluminum sheet 3. In FIG. 3, " (1) " indicates the result of Example 1. Other referential numbers indicate their respective Examples.

### (1-2) Example 2

Substantially the same procedure was repeated as in Example 1, except that a 5,000 series containing 2.5 % by mass of magnesium and 0.17 % by mass of silicon was used as the aluminum sheet 3. (1-3) Example 3

Substantially the same procedure was repeated as in Example 1, except that a 5,000 series containing 4.5 % by mass of magnesium and 0.12 % by mass of silicon was used as the aluminum sheet 3.

### (2) Example 4-9

In each of Examples 4-9, an alloyed-galvanized steel sheet having a zinc plated layer 2 with a thickness of 5.0 µm formed thereon and the aluminum sheet 3 with a different magnesium content were joined in the same manner as in Example 1, and a joining strength was measured.

### (2-1) Example 4

A mild steel sheet was used as the steel sheet 1, and on both sides thereof, zinc plated layers were formed by hot dip galvanization and then alloyed by heat treatment, to thereby obtain an alloyed-galvanized steel sheet having zinc plated layers 2, 2 with thickness of 5.0 µm formed thereon. A composition of the zinc plated layer 2 was 90 % by mass of zinc, 0.2 % by mass of aluminum and 9.8 % by mass of iron.

Then, the alloyed-galvanized steel sheet and a 6,000 series aluminum sheet 3 containing 0.5% by mass of magnesium and 1.0 % by mass of silicon were joined, and a joining strength was measured. Results of measurement are shown in Table 1 and FIG. 3, together with various properties and welding conditions of the alloyed-galvanized steel sheet and the aluminum sheet 3.

### (2-2) Example 5

Substantially the same procedure was repeated as in Example 4, except that a 5,000 series containing 4. 5 % by mass of magnesium and 0.12% by mass of silicon was used as the aluminum sheet 3.

### (2-3) Example 6

Substantially the same procedure was repeated as in Example 4, except that a 590 MPa grade high-tensile strength steel sheet was used as the steel sheet 1.

### (2-4) Example 7

Substantially the same procedure was repeated as in Example 5, except that a 590 MPa grade high-tensile strength steel sheet was used as the steel sheet 1.

### (2-5) Example 8

Substantially the same procedure was repeated as in Example 4, except that a 780 MPa grade high-tensile strength steel sheet was used as the steel sheet 1.

### (2-6) Example 9

Substantially the same procedure was repeated as in Example 5, except that a 780 MPa grade high-tensile strength steel sheet was used as the steel sheet 1.

### (3) Examples 10 and 11

In each of Examples 10 and 11, an electrogalvanized steel sheet having a zinc plated layer 2 with a thickness of 3.0 µm formed thereon and an aluminum sheet 3 with a different magnesium content were joined in the same manner as in Example 1, and a joining strength was measured.

### (3-1) Example 10

Substantially the same procedure was repeated as in Example 1, except that a zinc plated layer 2 having a thickness of 3.0 µm was formed by electroplating. A composition of the zinc plated layer 2 was 100% by mass of zinc. Results of joining strength measurement are shown in Table 1 and FIG. 3, together with various properties and welding conditions of the electrogalvanized steel sheet and the aluminum sheet 3.

### (3-2) Example 11

Substantially the same procedure was repeated as in Example 3, except that a zinc plated layer 2 having a thickness of 3.0 µm was formed by electroplating. A composition of the zinc plated layer 2 was 100% by mass of zinc.

### (4) Examples 12 and 13

In each of Examples 12 and 13, an Al-Zn plated steel sheet having a zinc plated layer 2 with a thickness of 10 µm with a low zinc content and a high aluminum content formed thereon and an aluminum sheet 3 with a different magnesium content were joined in the same manner as in Example 1, and a joining strength was measured.

### (4-1) Example 12

Substantially the same procedure was repeated as in Example 1, except that a zinc plated layer 2 having a zinc content of 45 % by mass and an aluminum content of 55 % by mass was formed by hot dip galvanization. Results of joining strength measurement are shown in Table 1 and FIG. 3, together with various properties and welding conditions of the Al-Zn plated steel sheet and the aluminum sheet 3.

### (4-2) Example 13

Substantially the same procedure was repeated as in Example 3, except that a zinc plated layer 2 having a zinc content of 45 % by mass and an aluminum content of 55 % by mass was formed by hot dip galvanization.

### (5) Examples 14 - 15

In each of Examples 14 and 15, a Zn-Al-Mg plated steel sheet on which a zinc plated layer 2 having a thickness of 10 µm including aluminum and iron in addition to zinc as a main component was formed thereon, and an aluminum sheet 3 with a different magnesium content were joined in the same manner as in Example 1, and a joining strength was measured.

### (5-1) Example 14

Substantially the same procedure was repeated as in Example 1, except that a zinc plated layer 2 having a zinc content of 85.8 % by mass, an aluminum content of 11.0 % by mass and a magnesium content of 3.0 % by mass was formed by hot dip galvanization. Results of joining strength measurement are shown in Table 1 and FIG. 3, together with various properties and welding conditions of the Zn-Al-Mg plated steel sheet and the aluminum sheet 3.

### (5-2) Example 15

Substantially the same procedure was repeated as in Example 3, except that a zinc plated layer 2 having a zinc content of 85. 8 % by mass, a aluminum content of 11.0 % by mass and a magnesium content of 3.0 % by mass was formed by hot dip galvanization.

### (6) Comparative Example 1

Substantially the same procedure was repeated as in Example 1, except that the steel sheet 1 and the aluminum sheet 3 were joined without forming zinc plated layers 2,2.

**Table 1**

| | Ex 1 | Ex 2 | Ex 3 | Ex 4 | Ex 5 | Ex 6 | Ex7 | Ex 8 | Ex 9 | Ex 10 | Ex 11 | Ex 12 | Ex 13 | Ex 14 | Ex 15 | Comparative Ex 1 |
|---|---|---|---|---|---|---|---|---|---|---|---|---|---|---|---|---|
| Object to be welded | | | | | | | | | | | | | | | | |
| · Steel sheet | | | | | | | | | | | | | | | | |
| Type of steel sheet | Hot dip galvanized steel sheet | | | Alloyed-galvanized steel sheet | | | | | | Electrogalvanized steel sheet | | Al-Zn plated steel sheet | | n-Al-Mg sheet | | Unplated steel sheet |
| Steel type | Mild steel sheet | | | | | 590MPa grade high-tensile strength steel sheet | | 780MPa grade high-tensile strength steel sheet | | Mild steel sheet | | | | | | |
| Thickness(mm) | 1 | 1 | 1 | 1 | 1 | 1 | 1 | 1 | 1 | 1 | 1 | 1 | 1 | 1 | 1 | 1 |
| Zn plated layer (µm) | 10 | 10 | 10 | 5 | 5 | 5 | 5 | 5 | 5 | 5 | 3 | 10 | 10 | 10 | 10 | - |
| Zn plated layer composition | | | | | | | | | | | | | | | | |
| Zn(%bymass) | 99.5 | 99.5 | 99.5 | 90 | 90 | 90 | 90 | 90 | 90 | 100 | 100 | 45 | 45 | 85.8 | 85.8 | - |
| Al (% by mass) | 0.5 | 0.5 | 0.5 | 0.2 | 0.2 | 0.2 | 0.2 | 0.2 | 0.2 | - | - | 55 | 55 | 11 | 11 | - |
| Mg (% by mass) | - | - | - | - | - | - | - | - | - | - | - | - | - | 3 | 3 | - |
| Fre (% by mass) | - | - | - | 9.8 | 9.8 | 9.8 | 9.8 | 9.8 | 9:8 | - | - | - | - | - | - | - |
| · Aluminum sheet | | | | | | | | | | | | | | | | |
| Thickness (mm) | 1 | I | 1 | 1 | 1 | 1 | 1 | 1 | 1 | 1 | 1 | 1 | 1 | 1 | 1 | 1 |
| Alloy type | AA 6022 | A 5052 | A 5182 | AA 6022 | A 5182 | AA 6022 | A 5182 | AA 6022 | A 5182 | AA 6022 | A 5182 | AA 6022 | A 5182 | AA 6022 | A 5182 | AA 6022 |
| Mg content (% by mass) | 0.5 | 2.5 | 4.5 | 0.5 | 4.5 | 0.5 | 4.5 | 0.5 | 4.5 | 0.5 | 4.5 | 0.5 | 4.5 | 0.5 | 4.5 | 0.5 |
| Si content (% by mass) | 1.0 | 0.17 | 0.12 | 1.0 | 0.12 2 | 1.0 | 0.12 | 1.0 | 0.12 | 1.0 | 0.12 | 1.0 | 0.12 | 1.0 | 0.12 | 1.0 |
| Welding conditions | | | | | | | | | | | | | | | | |
| Electrode diameter (mm) | 6 | 6 | 6 | 6 | 6 | 6 | 6 | 6 | 6 | 6 | 6 | 6 | 6 | 6 | 6 | 6 |
| Pinching force of Electrode (kN(kgf)) | 1.47 (150) | 1.47 (150) | 1.47 (150) | 1.47 (150) | 1.47 (150) | 1.47 (150) | 1.47 (150) | 1.47 (150) | 1.47 (150) | 1.47 (150) | 1.47 (150) | 1.47 (150) | 1.47 (150) | 1.47 (150) | 1.47 (150) | 1.47 (150) |
| Current(kA) | 14 | 14 | 14 | 14 | 14 | 14 | 14 | 14 | 14 | 14 | 14 | 14 | 14 | 14 | 14 | 14 |
| Current application cycle | 18 | 18 | 18 | 18 | 18 | 18 | 18 | 18 | 18 | 18 | 18 | 18 | 18 | 18 | 18 | 18 |
| Evaluation after welding | | | | | | | | | | | | | | | | |
| Joining strength (kN(kgf)) | 3.15 (321) | 2.84 (290) | 3.63 (370) | 3.32 (338) | 3.13 (320) | 3.38 (344) | 4.33 (441) | 2.78 (283) | 4.01(409) | 3.05 (311) | 3.03 (310) | 3.17 (323) | 3.08 (314) | 3.06 (312) | 2.84 (291) | 0-0.3 (30) |

### (7) Evaluations of Examples 1 - 15

As is apparent from Table 1 and FIG. 3, a joining strength of the steel sheet-aluminum sheet joined body 6 in each of Examples 1 - 15 is remarkably enhanced (more than 10 times) as compared with the case of Comparative Example 1 which does not exhibit a sufficient joining strength as a joined structure. Therefore, it proves that the method for joining an iron member and an aluminum member according to the present invention is suitable for excellently joining the steel sheet 1 and the aluminum sheet 3.

It also proves that, even when the zinc content of the zinc plated layer 2 is low (45 % by mass), an excellent joining strength is obtained (Examples 12 and 13).

## Claims

1. A method for joining an iron member composed mainly of iron and an aluminum member composed mainly of aluminum, comprising steps of:
forming a zinc layer on a joining side of at least one of the iron member and the aluminum member,
partially stacking the iron member and the aluminum member with the zinc layer being sandwiched therebetween, and
welding them together.

2. The method for joining iron member and aluminum member according to Claim 1, wherein the aluminum member contains magnesium.

3. The method for joining iron member and aluminum member according to Claim 1 or 2, wherein the welding is at least one of resistance welding, laser welding, electron beam welding and arc welding.
